(19) Europäisches Patentamt
European Patent Office
Office européen des brevets

(11) **EP 0 819 665 B1**

(12) **EUROPÄISCHE PATENTSCHRIFT**

(45) Veröffentlichungstag und Bekanntmachung des Hinweises auf die Patenterteilung:
**16.06.1999 Patentblatt 1999/24**

(51) Int. Cl.$^6$: **C04B 41/64**, C09D 183/04

(21) Anmeldenummer: **97111718.9**

(22) Anmeldetag: **10.07.1997**

(54) **Wässrige Cremes von Organosiliciumverbindungen für die Hydrophobierung von Baustoffen**

Aqueous creams of organosilicon compounds for hydrophobing building materials

Crèmes aqueuses en composés organosiliciés pour rendre hydrophobe des matériaux de construction

(84) Benannte Vertragsstaaten:
**AT BE CH DE ES FI FR GB IT LI NL SE**

(30) Priorität: **11.07.1996 DE 19628035**

(43) Veröffentlichungstag der Anmeldung:
**21.01.1998 Patentblatt 1998/04**

(73) Patentinhaber:
**Wacker-Chemie GmbH**
**81737 München (DE)**

(72) Erfinder:
• **Mayer, Hans, Dr.**
  **84489 Burghausen (DE)**
• **König-Lumer, Ingeborg**
  **84489 Burghausen (DE)**
• **Hausberger, Albert**
  **83361 Kienberg (DE)**

(74) Vertreter:
**Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
**EP-A- 0 476 452**       **WO-A-92/19671**
**WO-A-96/35652**        **DE-A- 4 242 445**
**DE-A- 4 335 077**      **US-A- 4 076 868**
**US-A- 5 226 954**

• **DATABASE WPI Section Ch, Week 8350 Derwent Publications Ltd., London, GB; Class A93, AN 83-843080 XP002041484 & SU 996 377 A (COMMUNAL MANAG COLL) , 15.Februar 1983**

**Beschreibung**

Die Erfindung betrifft wäßrige Cremes von Organosiliciumverbindungen, deren Herstellung und Verwendung.

Siliciumorganische Verbindungen werden im Bautenschutz vor allem wegen ihrer hervorragenden Imprägnierwirkung gegen Wasser und Schmutz eingesetzt. Besonders umweltverträglich und physiologisch unbedenklich sind die wäßrigen Emulsionen siliciumorganischer Verbindungen.

Die Emulsionen neigen zum Tropfen beim Arbeiten über Kopf. Wenn eine besonders tiefe Imprägnierung senkrecht stehender Baustoffflächen erwünscht ist, müssen die wäßrigen Emulsionen mehrfach aufgetragen werden, da bei zu dickem Auftrag durch Bürsten oder Spritzen die wäßrigen Emulsionen ablaufen. Beim Spritzauftrag der Emulsionen bilden sich ferner unerwünschte Aerosole. Mit Wasser gereinigte Baustoffflächen müssen getrocknet werden, damit die Emulsionen in ausreichendem Maße eindringen können.

Mineralische Verdickungsmittel enthaltende Siloxan- oder Silanzusammensetzungen können als dickere Schicht auf die Baustoffe aufgetragen werden. Dabei dringt Siloxan oder Silan in den Baustoff ein und das Verdickungsmittel bleibt zurück.

In der US-A-4,076,868 sind mit Siliciumdioxid mit einer Oberfläche von mindestens 50 $m^2/g$ verdickte Lösungen von Methylpolysiloxan in Toluol beschrieben, welche zum Wasserabweisend machen von Baustoffen eingesetzt werden. Diese Lösungen sind weder umweltverträglich noch physiologisch unbedenklich.

In der WO 95/25706 ist die wasserabweisende Behandlung von mineralischen Baustoffen mit einer gelartigen Masse beschrieben, die Silane und/oder Siloxane und ein Schichtmineral, wie Bentonit oder Montmorillonit aufweist.

Nachteilig bei den mineralische Verdickungmittel enthaltenden Zusammensetzungen ist die erforderliche nachträgliche Entfernung des Schichtminerals, die gründlich erfolgen muß, um Verfärbungen der Baustoffe zu vermeiden. Das Verdickungsmittel muß auch entsorgt werden. Weiterhin ist die Eindringtiefe der Silane und Siloxane begrenzt, da das Verdickungsmittel die Kapillaren des Baustoffs verstopfen kann.

Der Erfindung liegt die Aufgabe zugrunde, lagerstabile und einfach anzuwendende Zubereitungen von Organosiliciumverbindungen für die Hydrophobierung von porösen Baustoffen und Baubeschichtungen bereitzustellen, die umweltverträglich und physiologisch unbedenklich sind.

Gegenstand der Erfindung ist eine wäßrige standfeste Creme, wobei die Creme eine pastöse, wasserhaltige Zubereitung ist, welche ein von Festkörpern freies Emulsionssystem aus Wirkstoff, Wasser und Emulgatoren ist, welche die Komponenten

(A), welche ausgewählt werden aus
(A1) $C_1$-$C_{20}$-Alkyl-$C_2$-$C_6$-alkoxysilanen und
(A2) Alkoxygruppen enthaltendem Organopolysiloxan, gegebenenfalls
(B) Organopolysiloxan, das zusätzlich zu anderen Organosiloxaneinheiten solche Siloxaneinheiten enthält, die über SiC-gebundene Reste mit basischem Stickstoff aufweisen, mit der Maßgabe, daß die Aminzahl des Organopolysiloxans mindestens 0,01 beträgt, und
(C) Emulgator
enthält,
wobei die Creme dann standfest ist, wenn die Creme auf eine senkrechte Beton- oder Kalksandsteinfläche mit einer Auftragsstärke von 1 mm durch Spritzen oder Rakeln aufgebracht wird und diese Creme nach der Applikation nicht mehr als 1 cm nach unten absinkt, bevor sie von der Beton- oder Kalksandsteinfläche völlig absorbiert worden ist.

Als Creme werden pastöse, wasserhaltige Zubereitungen bezeichnet, die Emulsionssysteme aus Wirkstoff, Wasser und Emulgatoren sind. Cremes sind frei von Festkörpern.

Die erfindungsgemäßen wäßrigen Cremes dringen vollständig in den Baustoff ein. Dadurch stellt sich schnell ein Abperleffekt nach Applikation ein. Die Cremes sind besonders lagerstabil, da sie keinen Feststoff enthalten, der sich absetzt. Die wäßrigen Cremes sind lösemittelfrei, können jedoch herstellungsbedingt bis zu 1 Gew.-% Kohlenwasserstoffe, bezogen auf die Summe der Komponenten (A), gegebenenfalls (B) und (C) enthalten. Vorzugsweise enthalten die Cremes keine organischen Lösungsmittel, wie Kohlenwasserstoffe. Die wäßrigen Cremes sind daher von nicht porösen Untergründen, wie Fenster leicht mit Wasser abwaschbar. Insbesondere erfolgt die Reinigung der Arbeitsgeräte leicht mit Wasser.

Die wäßrigen Cremes sind standfeste streichbare, roll- und rakelbare vorzugsweise farblose Beschichtungen von cremiger Konsistenz.

Die Standfestigkeit der Creme wird wie folgt definiert:

Auf eine senkrechte Beton- oder Kalksandsteinfläche wird die Creme mit einer Auftragsstärke von 1 mm durch Spritzen oder Rakeln aufgebracht. Als Standfestigkeit wird definiert, daß diese Creme nach der Applikation nicht mehr als 1 cm, besonders bevorzugt gar nicht nach unten absinken darf, bevor sie vom Untergrund völlig absorbiert worden ist.

Vorzugsweise besitzen die $C_1$-$C_{20}$-Alkyl-$C_2$-$C_6$-alkoxysilane (A1) 1 oder 2 gleiche oder verschiedene, gegebenenfalls halogensubstituierte, über SiC-gebundene einwertige $C_1$-$C_{20}$-Alkylreste und die übrigen Reste sind gleiche oder verschiedene $C_2$-$C_6$-Alkoxyreste. Methoxysilane hydrolysieren zu schnell und verhindern eine ausreichende Lagerbeständigkeit.

Beispiele für die $C_1$-$C_{20}$-Alkylreste, sind der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest und Dodecylreste, wie der n-Dodecylrest; Cycloalkylreste, wie Cyclopentyl-, Cyclohexyl-, 4-Ethylcyclohexyl-, Cycloheptylreste, Norbornylreste und Methylcyclohexylreste.

Beispiele für halogensubstituierte $C_1$-$C_{20}$-Alkylreste sind mit Fluor-, Chlor-, Brom- und Jodatomen substituierte Alkylreste, wie der 3,3,3-Trifluor-n-propylrest, der 2,2,2,2',2',2'-Hexafluorisopropylrest und der Heptafluorisopropylrest.

Besonders bevorzugt sind die nicht substituierten $C_1$-$C_{12}$-Alkylreste.

Beispiele für $C_2$-$C_6$-Alkoxyreste sind der Ethoxy-, n-Propoxy-, Isopropoxy-, n-Butoxy-, iso-Butoxy-, sec.-Butoxy-, tert.-Butoxy-rest; Pentyloxyreste, wie der n-Pentyloxyrest und Hexyloxyreste, wie der n-Hexyloxyrest. Die Ethoxyreste sind besonders bevorzugt.

Die Alkoxyreste können mit Halogenatomen substituiert sein, jedoch ist dies nicht bevorzugt.

Die wäßrige Creme kann ein Alkoxygruppen enthaltendes Organopolysiloxan (A2) oder ein Gemisch mehrerer Organopolysiloxane enthalten. Die Organopolysiloxane können zusätzlich Hydroxylgruppen enthalten, die eine Bindung an die Baustoffe erleichtern.

Die Organopolysiloxane (A2) weisen vorzugsweise eine Viskosität von höchstens 2000 mPa.s auf, um eine besonders gute Verteilung auf den Porenoberflächen im Mauerwerk zu erreichen. Es können auch höherviskose Organopolysiloxane, bis hin zu Festharzen z.B. Methylsiliconfestharze mit einem Molgewicht von 2000 bis 10000 g/mol mit beispielsweise einem Glasübergangstemperaturbereich von 40-50°C eingesetzt werden. Diese müssen allerdings vor Herstellung der erfindungsgemäßen Creme in den Silanen (A1) gelöst werden.

Besonders geeignet sind die Organopolysiloxane (A2) aus Einheiten der allgemeinen Formel (I)

$$R_xSi(OR^1)_ySi(OH)_zO_{\frac{4-x-y-z}{2}} \qquad (I),$$

in der

R    gleiche oder verschiedene einwertige, gegebenenfalls halogensubstituierte, über SiC-gebundene $C_1$-$C_{20}$-Kohlenwasserstoffreste,

$R^1$   gleiche oder verschiedene einwertige $C_1$-$C_6$-Alkylreste,

x    0, 1, 2 oder 3, durchschnittlich 0,8 bis 1,8,

y    0,1, 2, oder 3, durchschnittlich 0,01 bis 2,0 und

z    0, 1, 2 oder 3, durchschnittlich 0,0 bis 0,5 bedeuten, mit der Maßgabe, daß die Summe von **x, y** und **z** höchstens 3,5 beträgt.

Vorzugsweise besitzt das Organopolysiloxan (A2) eine Viskosität von 10 mPa.s bis 50000 mPa.s, insbesondere 50 mPa.s bis 5000 mPa.s bei 25°C.

Beispiele für die $C_1$-$C_{20}$-Kohlenwasserstoffreste sind die vorstehend bei den Organoalkoxysilanen (A1) aufgeführten $C_1$-$C_{20}$-Alkylreste und halogensubstituierten $C_1$-$C_{20}$-Alkylreste, die Alkenylreste, wie der Vinyl-, Allyl, n-5-Hexenyl-, 4-Vinylcyclohexyl- und der 3-Norbornenylrest; Arylreste, wie der Phenyl-, Biphenylyl-, Naphthyl-, Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest. Besonders bevorzugt sind die nicht substituierten $C_1$-$C_{12}$-Alkylreste und der Phenylrest.

Obwohl in der vorstehend aufgeführten Formel nicht aufgeführt, kann ein Teil der Reste **R** durch direkt an Siliciumatome gebundene Wasserstoffatome ersetzt sein. Dies ist jedoch nicht bevorzugt.

Beispiele für die Reste $R^1$ sind der Methyl-, Ethyl-, n-Propyl-, Isopropyl-, n-Butyl-, sec.-Butyl-, und tert.-Butylrest; Pentylreste, wie der n-Pentylrest und Hexylreste, wie der n-Hexylrest, wobei die Ethylreste besonders bevorzugt sind.

Vorzugsweise hat **x** einen durchschnittlichen Wert von 0,9 bis 1,1. Vorzugsweise hat **y** einen durchschnittlichen Wert von 0,4 bis 1,2. Vorzugsweise hat **z** einen durchschnittlichen Wert von 0,0 bis 0,2.

Beispiele für Organosiloxane (A2) sind solche, die durch Umsetzung von Methyltrichlorsilan und gegebenenfalls einem $C_1$-$C_8$-Alkyltrichlorsilan, oder Phenyltrichlorsilan mit Ethanol in Wasser erhältlich sind, wie die Organopolysiloxane der Summenformeln

$$CH_3Si(OC_2H_5)_{0,8}O_{1,1} \text{ oder}$$

$$C_6H_5Si(OC_2H_5)_{0,72}O_{1,14}.$$

Die gegebenenfalls zusätzlich zu Komponente (A) eingesetzten Organopolysiloxane (B) sind vorzugsweise solche aus Einheiten der allgemeinen Formel (II)

$$R^2{}_a R^3{}_b (OR^4)_c SiO_{\frac{4-a-b-c}{2}} \qquad \text{(II)},$$

in der

$R^2$ gleiche oder verschiedene einwertige, von basischem Stickstoff freie, gegebenenfalls halogensubstituierte, SiC-gebundene $C_1$-$C_{20}$-Kohlenwasserstoffreste bedeutet,

$R^3$ gleiche oder verschiedene einwertige, gegebenenfalls halogensubstituierte, SiC-gebundene basischen Stickstoff aufweisende $C_1$-$C_{30}$-Kohlenwasserstoffreste bedeutet,

$R^4$ gleich oder verschieden sein kann und Wasserstoffatom oder $C_1$-$C_6$-Alkylreste,

a 0, 1, 2 oder 3,

b 0, 1, 2 oder 3, durchschnittlich mindestens 0,05 und

c 0, 1, 2 oder 3 ist,

mit der Maßgabe, daß die Summe aus **a**, **b** und **c** kleiner oder gleich 3 ist und daß die Aminzahl des Organopolysiloxans (B) mindestens 0,01 beträgt.

Die Aminzahl bezeichnet die Anzahl der ml 1-n-HCl, die zum Neutralisieren von 1 g Organopolysiloxan (B) erforderlich sind. Die Aminzahl des Organopolysiloxans (B) beträgt vorzugsweise mindestens 0,1, insbesondere mindestens 0,2, und vorzugsweise höchstens 8, insbesondere höchstens 4.

Beispiele und bevorzugte Beispiele für den Rest $R^2$ sind vorstehend bei Rest **R** aufgeführt. Insbesondere sind der Methyl- und der Isooctylrest bevorzugt.

Vorzugsweise ist an jedes Siliciumatom, an das ein Wasserstoffatom gebunden ist, auch ein Kohlenwasserstoffrest, insbesondere ein Methylrest, gebunden.

Bevorzugt handelt es sich bei Rest $R^3$ um einen Rest der allgemeinen Formel (III)

$$R^5{}_2 NR^6\text{-} \qquad \text{(III)},$$

worin

$R^5$ gleich oder verschieden sein kann und Wasserstoff oder einwertiger, gegebenenfalls substituierter $C_1$-$C_{10}$-Kohlenwasserstoffrest oder $C_1$-$C_{10}$-Aminokohlenwasserstoffrest und

$R^6$ einen zweiwertigen $C_1$-$C_{15}$-Kohlenwasserstoffrest bedeuten.

Beispiele für den Rest $R^5$ sind die für Rest **R** gegebenen Beispiele für Kohlenwasserstoffreste sowie mit Aminogruppen substituierte Kohlenwasserstoffreste, wie Aminoalkylreste, wobei der Aminoethylrest besonders bevorzugt ist.

Vorzugsweise ist an jedes Stickstoffatom in den Resten der allgemeinen Formel (III) mindestens ein Wasserstoffatom gebunden.

Bevorzugt handelt es sich bei Rest $R^6$ um zweiwertige Kohlenwasserstoffreste mit 1 bis 10 Kohlenstoffatomen, besonders bevorzugt 1 bis 4 Kohlenstoffatomen, insbesondere um den n-Propylenrest.

Beispiele für Rest $R^6$ sind der Methylen-, Ethylen-, Propylen-, Butylen-, Cyclohexylen-, Octadecylen-, Phenylen- und Butenylenrest.

Bevorzugte Beispiele für Reste $R^3$ sind

$H_2N(CH_2)_3$-,
$H_2N(CH_2)_2NH(CH_2)_2$-,
$H_2N(CH_2)_2NH(CH_2)_3$-,
$H_2N(CH_2)_2$-,
$H_3CNH(CH_2)_3$-,
$C_2H_5NH(CH_2)_3$-,
$H_3CNH(CH_2)_2$-,
$C_2H_5NH(CH_2)_2$-,

$H_2N(CH_2)_4-$,
$H_2N(CH_2)_5-$,
$H(NHCH_2CH_2)_3-$,
$C_4H_9NH(CH_2)_2NH(CH_2)_2-$,
cyclo-$C_6H_{11}NH(CH_2)_3-$,
cyclo-$C_6H_{11}NH(CH_2)_2-$,
$(CH_3)_2N(CH_2)_3-$ ,
$(CH_3)_2N(CH_2)_2-$ ,
$(C_2H_5)_2N(CH_2)_3-$ und
$(C_2H_5)_2N(CH_2)_2-$ .

Die Beispiele für Alkylreste $R^1$ gelten im vollen Umfang auch für den Rest $R^6$.

Beispiele und bevorzugte Beispiele für den Rest $R^4$ sind vorstehend bei Rest $R^1$ aufgeführt. Insbesondere sind der Methyl- und der Ethylrest bevorzugt.

Der bevorzugte durchschnittliche Wert für **a** ist 0 bis 2, insbesondere 0 bis 1,8.

Der bevorzugte durchschnittliche Wert für **b** ist 0,1 bis 0,6, insbesondere 0,15 bis 0,30.

Der bevorzugte durchschnittliche Wert für **c** ist 0 bis 0,8, insbesondere 0,01 bis 0,6.

Vorzugsweise haben die Organopolysiloxane (B) eine Viskosität von 5 bis 5000, insbesondere von 100 bis 3000 mPa.s bei 25°C.

Organopolysiloxane (B) können in bekannter Weise, beispielsweise durch Äquilibrieren bzw. Kondensieren von aminofunktionellen Silanen mit Organopolysiloxanen, die Alkoxygruppen und/oder Hydroxylgruppen enthalten und die frei von basischem Stickstoff sind, hergestellt werden.

Die wässrigen Cremes enthalten einen an sich bekannten Emulgator (C).

Als anionische Emulgatoren eignen sich besonders:

1. Alkylsulfate, besonders solche mit einer Kettenlänge von 8 bis 18 C-Atomen, Alkyl- und Alkarylethersulfate mit 8 bis 18 C-Atomen im hydrophoben Rest und 1 bis 40 Ethylenoxid (EO)- bzw. Propylenoxid(PO)einheiten.

2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen; gegebenenfalls können diese Alkohole oder Alkylphenole auch mit 1 bis 40 EO-Einheiten ethoxyliert sein.

3. Alkali- und Ammoniumsalze von Carbonsäuren mit 8 bis 20 C-Atomen im Alkyl-, Aryl-, Alkaryl- oder Aralkylrest.

4. Phosphorsäureteilester und deren Alkali- und Ammoniumsalze, besonders Alkyl- und Alkarylphosphate mit 8 bis 20 C-Atomen im organischen Rest, Alkylether- bzw. Alkaryletherphosphate mit 8 bis 20 C-Atomen im Alkyl- bzw. Alkarylrest und 1 bis 40 EO-Einheiten.

Als nichtionische Emulgatoren eignen sich besonders:

5. Polyvinylalkohol, der noch 5 bis 50 %, vorzugsweise 8 bis 20 % Vinylacetateinheiten aufweist, mit einem Polymerisationsgrad von 500 bis 3000.

6. Alkylpolyglycolether, vorzugsweise solche mit 8 bis 40 EO-Einheiten und Alkylresten von 8 bis 20 C-Atomen.

7. Alkylarylpolyglycolether, vorzugsweise solche mit 8 bis 40 EO-Einheiten und 8 bis 20 C-Atomen in den Alkyl- und Arylresten.

8. Ethylenoxid/Propylenoxid(EO/PO)-Blockcopolymere, vorzugsweise solche mit 8 bis 40 EO- bzw. PO-Einheiten.

9. Additionsprodukte von Alkylaminen mit Alkylresten von 8 bis 22 C-Atomen mit Ethylenoxid oder Propylenoxid.

10. Fettsäuren mit 6 bis 24 C-Atomen.

11. Alkylpolyglykoside der allgemeinen Formel $R^*$-O-$Z_o$, worin $R^*$ einen linearen oder verzweigten, gesättigten oder ungesättigten Alkylrest mit im Mittel 8 - 24 C-Atomen und $Z_o$ einen Oligoglykosidrest mit im Mittel o = 1 - 10 Hexose- oder Pentoseeinheiten oder Gemischen davon bedeuten.

12. Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen.

13. Polare Gruppen enthaltende lineare Organo(poly)siloxane, insbesondere solche mit Alkoxygruppen mit bis zu 24 C-Atomen und/oder bis zu 40 EO- und/oder PO-Gruppen.

Als kationische Emulgatoren eignen sich besonders:

14. Salze von primären, sekundären und tertiären Fettaminen mit 8 bis 24 C-Atomen mit Essigsäure, Schwefelsäure, Salzsäure und Phosphorsäuren.

15. Quarternäre Alkyl- und Alkylbenzolammoniumsalze, insbesondere solche, deren Alkylgruppe 6 bis 24 C-Atome besitzen, insbesondere die Halogenide, Sulfate, Phosphate und Acetate. 16. Alkylpyridinium-, Alkylimidazolinium- und Alkyloxazoliniumsalze, insbesondere solche, deren Alkylkette bis zu 18 C-A-tome besitzt, speziell die Halogenide, Sulfate, Phosphate und Acetate.

Als Ampholytische Emulgatoren eignen sich besonders:

17. Langkettig substituierte Aminosäuren, wie N-Alkyl-di-(aminoethyl-)glycin oder N-Alkyl-2-aminopropionsäuresalze.

18. Betaine, wie N-(3-Acylamidopropyl)-N,N-dimethylammoniumsalze mit einem $C_8$-$C_{18}$-Acylrest und Alkyl-imidazolium-Betaine.

Bevorzugt als Emulgatoren sind nichtionische Emulgatoren, insbesondere die vorstehend unter 6. aufgeführten Alkylpolyglycolether, die unter 9. aufgeführten Additionsprodukte von Alkylaminen mit Ethylenoxid oder Propylenoxid, die unter 11. aufgeführten Alkylpolyglykoside und der unter 5. aufgeführte Polyvinylalkohol. Besonders bevorzugte Polyvinylalkohole enthalten noch 5 bis 20 %, insbesondere 10 bis 15 % Vinylacetateinheiten und weisen vorzugsweise einen Polymerisationsgrad von 500 bis 3000, insbesondere von 1200 bis 2000 auf.

Die Gesamtmenge der Komponenten (A) und (B) in den wässrigen Cremes beträgt vorzugsweise 60 bis 95 Gew.-%, insbesondere 65 bis 90 Gew.-%, speziell 75 bis 85 Gew.-%.

Der Anteil der Komponente (B) in den wässrigen Cremes beträgt vorzugsweise 1 bis 20 Gew.-%, insbesondere 2 bis 15 Gew.-%, speziell 3 bis 10 Gew.-%.

Der Anteil des Emulgators (C) in den wässrigen Cremes beträgt vorzugsweise 0,1 bis 5 Gew.-%, insbesondere 0,2 bis 2 Gew.-%, speziell 0,3 bis 1 Gew.-%. Vorteilhaft ist der geringe Bedarf an Emulgator (C), der ja kein hydrophobierender Wirkstoff ist.

Die wäßrigen Cremes können noch Puffersubstanzen enthalten, die den pH-Wert im Bereich von 5 bis 8 stabilisieren, in dem die Alkyltrialkoxysilane sehr hydrolysebeständig sind. Geeignet sind alle organischen und anorganischen Säuren und Basen, die sich gegenüber den übrigen Bestandteilen der Emulsionen chemisch inert verhalten, insbesondere die Alkali-, Erdalkali -und Ammoniumsalze von Carbonsäuren, Phosphor-, Kohlen- und Schwefelsäure. Besonders bevorzugt sind Natriumcarbonat, Natriumhydrogencarbonat, Natriumhydrogenphosphat, und ein Gemisch aus Essigsäure und wässriger Ammoniaklösung. Die Menge an Puffersubstanzen beträgt vorzugsweise höchstens 3, insbesondere 1 Gew.-% der Gesamtmenge der Cremes.

Die wäßrigen Cremes können zusätzlich zu den vorstehend beschriebenen Bestandteilen als Zusatzstoffe Fungizide, Bakterizide, Algicide, Mikrobicide, Geruchsstoffe, Korrosionsinhibitoren und Entschäumer enthalten. Die bevorzugte Menge an Zusatzstoffen beträgt höchstens 2, insbesondere 0,5 Gew.-% der Gesamtmenge der Cremes.

Die erfindungsgemäßen wässrigen Cremes werden nach üblichen Verfahren zur Herstellung von wässrigen Cremes hergestellt.

In einem bevorzugten Verfahren wird im ersten Schritt aus einem Teil der Komponenten (A) und gegebenenfalls (B) und dem größten Teil des Emulgators und des Wassers eine leicht bewegliche wäßrige Emulsion hergestellt. Vorzugsweise werden dabei höchstens 20 Gew.-%, insbesondere höchstens 15 Gew.-% der Gesamtmenge der Komponenten (A) und (B) eingesetzt. Vorzugsweise wird der größte Teil, insbesondere mindestens 80 Gew.-% der Komponente (B) eingesetzt, da diese auch Tensidcharakter aufweist. Vorzugsweise werden mindestens 80 Gew.-%, insbesondere mindestens 90 Gew.-% des Emulgators (C) bei der Herstellung der wäßrigen Emulsion eingesetzt.

Vorzugsweise wird zunächst nur ein Teil des Wassers, vorzugsweise 5 bis 40 Gew.-%, mit Emulgator (C) vermischt, danach gegebenenfalls die Komponente (B) und schließlich die Komponente (A) emulgiert, bis eine viskose Ölphase entsteht und anschließend das restliche Wasser zur Bildung einer weniger viskosen Emulsion zuemulgiert. Die Komponenten (A) und (B) können auch vermischt und zu einer Emulsion aus Emulgator und Wasser gegeben werden.

Im 2. Schritt des bevorzugten Herstellungsverfahren werden die restlichen Komponenten (A) und gegebenenfalls (B) in die wäßrige Emulsion eingearbeitet, bis eine cremeartige Konsistenz erreicht ist.

Beide Schritte werden vorzugsweise in Druckemulgiermaschinen, Kolloidmühlen oder insbesondere in einer schnelllaufenden Stator-Rotor-Rührvorrichtung nach Prof. P. Willems durchgeführt.

Die erfindungsgemäßen wäßrigen Cremes eignen sich besonders zur Hydrophobierung von Baustoffen, insbesondere zur nachträglichen hydrophobierenden Imprägnierung von Sichtmauerwerk, Beton und/oder Stahlbeton.

Die Auftragsstärke der erfindungsgemäßen Hydrophobierungscreme beträgt vorzugsweise 0,1 mm bis 3 mm, insbesondere 0,2 mm bis 1,5 mm, besonders bevorzugt 0,3 mm bis 1,1 mm.

Die wäßrigen Cremes eignen sich weiterhin zur Hydrophobierung von mineralischen Baustoffen, wie Natur- oder Kunststein, Beton, Zement, Kalksandstein und Porenbeton, Baustoffen aus Tonmineralien, wie Ziegel, als Hydrophobierungs- und gegebenenfalls als Bindemittel wirkender Zusatz zu Gips, Verputzen und in Bautenbeschichtungen, wie Mineralfarben, Siliconharzemulsionsfarben und -putzen, Dispersionssilikatfarben, Dispersionsfarben, Streichfüllern, Armierungsmassen und Grundierungen. Insbesondere wird die Frühregenfestigkeit bei Bautenbeschichtungsmitteln verbessert.

Die wäßrigen Cremes sind auch geeignet zur Hydrophobierung von feinteiligen anorganischen Stoffen, wie Perlit, Vermiculit und Wärmedämmstoffen.

Die wäßrigen Cremes sind besonders geeignet zur Hydrophobierung von mineralisch gebundenen, vorzugsweise zementgebundenen Faserbaustoffen, deren Fasern aus Naturfasern oder Synthesefasern bestehen. Geeignete Naturfasern sind Mineralfasern, wie Steinwolle, Quarz- oder Keramikfasern oder Pflanzenfasern, wie Zellulose. Geeignete Synthesefasern sind beispielsweise Glasfasern, Kunststoffasern und Kohlefasern. Besonders bevorzugt ist die Verwendung der wäßrigen Creme zur Hydrophobierung von zementgebundenen Zellulosefaserbauteilen. Die Zellulosefasern können beispielsweise Jute-, Kokos- oder Hanffasern sein oder aus Papier, Karton oder Altpapier stammen.

Die wäßrigen Cremes eignen sich auch für die Anwendung in Masse, d.h. die Creme wird einer hydraulischen Mischung zur Herstellung von Bauteilen vor dem Abbinden zugesetzt oder für die Hydrophobierung von Bauteilen nach dem Abbinden.

Die erfindungsgemäßen wäßrigen Cremes können vor ihrer Verwendung als Hydrophobierungs- und gegebenenfalls Bindemittel mit Wasser verdünnt werden.

In den folgenden Beispielen beziehen sich alle Angaben von Teilen und Prozentsätzen, soweit nichts anderes angegeben ist, auf das Gewicht. Sofern nicht anders angegeben, werden die nachstehenden Beispiele bei einem Druck der umgebenden Atmosphäre, also etwa bei 0,10 MPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt. Der Wirkstoffgehalt der wäßrigen Cremes bezeichnet die Summe aller siliciumorganischen Komponenten.

**Beispiele**

Als Komponente (A) werden eingesetzt:

H1:   iso-Octyltriethoxysilan
H2:   Organopolysiloxan der Summenformel $CH_3Si(OC_2H_5)_{0,8}O_{1,1}$ mit einem durchschnittlichen Molekulargewicht von etwa 650 g/Mol und einer Viskosität von etwa 20 $mm^2$/s.
H3:   Als hochviskose Flüssigkeit vorliegendes Methylsiliconharz aus $CH_3SiO_{3/2}$-Einheiten, mit etwa 20 Mol.-% $(CH_3)_2SiO_{2/2}$-Einheiten und etwa 10 Mol.-% $C_2H_5O/SiO_{3/2}$-Einheiten und einem Molekulargewicht von etwa 5000 g/Mol.

Gegebenenfalls als Komponente (B) werden eingesetzt:

N1:   Kondensationsprodukt aus eines in den endständigen Einheiten je eine Si-gebundene Hydroxylgruppe aufweisenden $\alpha$, $\omega$ -Dihydroxymethylpolysiloxans und N(-2-Aminoethyl)-3-aminopropyltrimethoxysilan in Gegenwart von KOH mit einer Aminzahl von etwa 0,3, einer Viskosität von etwa 1500 $mm^2$/s bei 25 °C und einem Restmethoxygehalt von weniger als 5 Mol.-%, bezogen auf die anfangs im N(-2-Aminoethyl)-3-aminopropyltrimethoxysilan vorhandenen Methoxygruppen.
N2:   Kondensationsprodukt analog N1, jedoch mit einer Aminzahl von etwa 0,6, einer Viskosität von etwa 2000 $mm^2$/s bei 25 °C.

Als Komponente (C) werden eingesetzt:

E1:   Umsetzungsprodukt aus Stearylamin und Ethylenoxid mit einer Alkalizahl von 48 bis 51 mg KOH/g.
E2:   Isotridecylalkoholglykolether mit 10 Ethylenoxideinheiten, 80 %ig in Wasser.

Herstellung der erfindungsgemäßen wäßrigen Cremes

Die nachstehenden erfindungsgemäßen wäßrigen Cremes werden dadurch hergestellt, daß zunächst eine wäßrige Emulsion gegebenenfalls mit hohem Gehalt an Komponente (B), vorgelegt wird. Bei der Herstellung der Emulsionen wird zunächst nur ein Teil des Wassers, nämlich 5 bis 40 Gew.-% mit Emulgator vermischt und gegebenenfalls aminofunktionelles Polysiloxan (B) gefolgt von Komponente (A) emulgiert. Es kann aber auch die gesamte Wassermenge vorgelegt werden. Anschließend wird in die Emulsion die restliche Komponente (A) eingearbeitet. Das erwähnte Einarbeiten erfolgt in einer schnellaufenden Stator-Rotor-Rührvorrichtung nach Prof. P. Willems. Die Zusammensetzungen sind nachstehend in Tabelle I aufgeführt. Unter Wirkstoffgehalt soll die Summe aller Silicon-Bestandteile verstanden werden.

Tabelle I

| wäßrige Creme | Silan/Siloxan/Siliconharz [Gew.-%] | Aminopolysiloxan [Gew.-%] | Emulgator [Gew.-%] | Wasser [Gew.-%] | Wirkstoffgehalt [Gew.-%] |
|---|---|---|---|---|---|
| WC 1 | H 1/76,5 | N 1/8,5 | E 1/0,4<br>E 2/0,4 | 14,2 | 85,0 |
| WC 2 | H 1/72 | N 1/8 | E 1/0,4<br>E 2/0,4 | 19,2 | 80,0 |
| WC 3 | H 1/76 | N 1/4 | E 1/0,2<br>E 2/0,2 | 19,6 | 80,0 |
| WC 4 | H 1/66,5<br>H 2/ 9,5 | N 2/4,2 | E 1/0,2<br>E 2/0,2 | 20,4 | 80,2 |
| WC 5 | H 1/57<br>H 2/19 | N 1/4 | E 1/0,2<br>E 2/0,2 | 21,6 | 80,0 |
| WC 6 | H 1/41,8<br>H 2/ 7,6<br>H 3/26,6 | N 1/4 | E 1/0,2<br>E 2/0,2 | 19,6 | 80,0 |
| WC 7 | H 1/80 | - | E 1/0,2<br>E 2/0,2 | 19,6 | 80,0 |

Die erfindungsgemäßen Cremes WC 1 bis WC 7 werden im einzelnen wie folgt hergestellt:

WC 1:    Vorgelegt werden 67,6 g Emulsion hergestellt aus 34 g N 1, je 1,6 g E 1 und E 2 und 30,4 g Wasser. Anschließend werden 306 g Silan H 1 sowie 26,4 g Wasser abwechselnd in je 6 Portionen bis zum Erhalt einer weißen, wäßrigen Creme in einer schnellaufenden Stator-Rotor-Rührvorrichtung eingearbeitet.

WC 2:    Vorgelegt werden 64 g Emulsion hergestellt aus 32 g N 1, je 1,6 g E 1 und E 2 und 28,8 g Wasser. Anschließend werden 288 g Silan H 1 sowie 48 g Wasser abwechselnd in je 6 Portionen bis zum Erhalt einer weißen, wäßrigen Creme in einer schnellaufenden Stator-Rotor-Rührvorrichtung eingearbeitet.

WC 3:    Vorgelegt werden 32 g Emulsion hergestellt aus 16 g N 1, je 0,8 g E 1 und E 2 und 14,4 g Wasser. Anschließend werden 304 g Silan H 1 sowie 64 g Wasser abwechselnd in je 6 Portionen bis zum Erhalt einer weißen, wäßrigen Creme in einer schnellaufenden Stator-Rotor-Rührvorrichtung eingearbeitet.

WC 4:    Vorgelegt werden 33,5 g Emulsion hergestellt aus 16,8 g N 2, je 0,8 g E 1 und E 2 und 15,1 g Wasser. Anschließend wird ein Gemisch aus 266 g Silan H 1 und 38 g Siloxan H 2 sowie 62,5 g Wasser abwechselnd in je 6 Portionen bis zum Erhalt einer weißen, wäßrigen Creme in einer schnellaufenden Stator-Rotor-Rührvorrichtung eingearbeitet.

WC 5:    Vorgelegt werden 32 g Emulsion hergestellt aus 16 g N 1, je 0,8 g E 1 und E 2 und 14,4 g Wasser. Anschließend wird ein Gemisch aus 228 g Silan H 1 und 76 g Siloxan H 2 sowie 64 g Wasser abwechselnd in je 6 Portionen bis zum Erhalt einer weißen, wäßrigen Creme in einer schnellaufenden Stator-Rotor-Rührvorrichtung eingearbeitet.

WC 6:    Vorgelegt werden 32 g Emulsion hergestellt aus 16 g N 1, je 0,8 g E 1 und E 2 und 14,4 g Wasser. Anschließend wird ein Gemisch aus 167,2 g Silan H 1, 30,4 g Siloxan H 2 und 106,4 g Siliconharz H 3 sowie 64 g Wasser abwechselnd in je 6 Portionen bis zum Erhalt einer weißen, wäßrigen Creme in einer schnellaufenden Stator-Rotor-Rührvorrichtung eingearbeitet.

WC 7:    Vorgelegt werden 32 g Emulsion hergestellt aus 16 g H 1, je 0,8 g E 1 und E 2 und 14,4 g Wasser. Anschließend werden 304 g Silan H 1 sowie 64 g Wasser abwechselnd in je 6 Portionen bis zum Erhalt einer weißen, wäßrigen Creme in einer schnellaufenden Stator-Rotor-Rührvorrichtung eingearbeitet.

Die wäßrigen Cremes WC 1 bis WC 7 zeigen nach 4 Wochen Lagerung bei 50 °C keinerlei Phasentrennung, ebenso nach 12 Monaten Lagerung bei Raumtemperatur. Sie sind also lagerstabil. Alle Cremes weisen exzellentes Standvermögen auf. Auftragsstärken von 1 mm auf vertikalen Baustoffflächen führen zu keinerlei Absinkverhalten.

Bereits am nächsten Tag stellt sich sehr guter Abperleffekt von Wasser ein, wenn die wäßrigen Cremes unverdünnt oder wenn Verdünnungen der wäßrigen Cremes WC 1 bis WC 6 mit etwa 1 bis 10 % Wirkstoffgehalt auf mineralische Oberflächen appliziert werden. Bei den behandelten Oberflächen werden Kontaktwinkel von > 90 ° gemessen. Bei WC 7, als reiner Silancreme, tritt dieser Abperleffekt mit Kontaktwinkeln von > 90 ° erst nach längerer Zeit ein.

Herstellung der nichterfindungsgemäßen nichtwäßrigen Silicon-Pasten als Vergleichssubstanzen

Die zu Vergleichszwecken verwendeten nichtwäßrigen Silicon-Pasten SG 1 und SG 2 wurden gemäß WO 95/25706, Beispiel 4 b) und Beispiel 4 e) hergestellt. Unter Wirkstoffgehalt soll die Summe aus allen Silicon-Bestandteilen verstanden werden.

Tabelle II

| Silicon- Pasten | Silan/Siloxan [Gew.-%] | Bentonite [Gew.-%] | Lösemittel Ethanol [Gew.-%] | Wirkstoffgehalt [Gew.-%] |
|---|---|---|---|---|
| SG 1 | H 1/85 | 12 | 3 | 85,0 |
| SG 2 | H 1/58 | 19 | 3 | 78,0 |
|  | H 2/20 |  |  |  |

Die nichterfindungsgemäßen Silicon-Pasten werden im einzelnen wie folgt hergestellt:

SG 1: 340 g Silan H 1 werden mit 48 g Bentonit (Bentone[®] 34) und 12 g Ethanol mithilfe eines langsam laufenden Rührers vermischt, bis eine relativ hochviskose, ockerfarbene Paste resultiert. Die Paste ist standfest. Der Auftrag von 1mm Dicke auf vertikaler Baustoffoberfläche führt zu keinem Absinkverhalten.

SG 2: 232 g Silan H 1 und 80 g Siloxan H 2 werden mit 76 g Bentonit (Bentone[®] 34) und 12 g Ethanol mit Hilfe eines langsam laufenden Rührers vermischt, bis eine relativ hochviskose, ockerfarbene Paste resultiert. Die Paste ist standfest. Der Auftrag von 1 mm Dicke auf vertikaler Baustoffoberfläche führt zu keinerlei Absinkverhalten.

**Beispiele 1: Hydrophobierungsmittel für poröse mineralische Baustoffe**

Vor der Anwendung an porösen mineralischen Baustoffen werden erfindungsgemäße Cremes und nichterfindungsgemäße Pasten 14 Tage bei 50 °C gelagert und optisch beurteilt. Die in der nachstehenden Tabelle III aufgeführten Symbole weisen folgende Bedeutungen auf:

+++: keine optische Veränderung
---: deutliche Abscheidung von Siliconflüssigkeit

Die Cremes und Pasten werden auf mit Mineralfarbe (Silikatfarbe Purkristallat[®] der Keimfarben GmbH, Diedorf) beschichteten Kalksandstein durch Applikation mit dem Pinsel aufgetragen. Nach 14tägigem Lagern bei Raumtemperatur wird die Verfärbung des beschichteten und hydrophobierten Kalksandsteins, sowie der Abperleffekt von aufgetropftem Wasser durch Messen des Kontaktwinkels beurteilt. Kontaktwinkel von > 90 ° bezeichnen gute Abperleffekte und Kontaktwinkel von < 90 ° bezeichnen eher schlechte Abperleffekte. Die Ergebnisse sind in der nachstehenden Tabelle III aufgeführt.

Ausgehärtete Betonprobekörper werden mit Cremes und Pasten unterschiedlicher Auftragsstärke beschichtet. Nach 14tägigem Lagern bei Raumtemperatur werden die Probekörper gebrochen. Die Dicke der hydrophoben Zone an der Oberfläche bezeichnet die Eindringtiefe. Mit der Eindringtiefe sinkt die Wasseraufnahme des Betons und steigt gleichzeitig dessen Hydrophobie. Die Ergebnisse sind in der nachstehenden Tabelle III aufgeführt.

Die Cremes und Pasten werden auf Kalksandstein durch Applikation mit dem Pinsel aufgetragen. Nach 14tägigem Lagern bei Raumtemperatur wird die Wasseraufnahme durch Messen des Wasseraufnahmekoeffizienten w nach DIN 52617 beurteilt. Werte $w < 0,1 \text{ kg/m}^2 \times \text{s}^{1/2}$ bezeichnen eine äußerst geringe Wasseraufnahme.

Tabelle III

| Cremes/Pasten Wirkstoffgehalt [Gew.-%] | Lagerstabilität | Verfärbung der behandelten Betonoberfläche | Abperleffekt/ Kontaktwinkel | Auftragsstärke/ Eindringtiefe auf Beton | w-Werte | Reinigungs-verhalten*** |
|---|---|---|---|---|---|---|
| WC 1 / 85,0 | +++ | keine | sehr gut / 140 ° | 0,8 mm/16 mm | 0,036 kg/m² x s$^{1/2}$ | +++ |
| WC 2 / 80,0 | +++ | keine | sehr gut / 130 ° | 0,5 mm/10 mm | 0,040 kg/m² x s$^{1/2}$ | +++ |
| WC 3 / 80,0 | +++ | keine | sehr gut / 140 ° | 0,2 mm/ 8 mm | 0,030 kg/m² x s$^{1/2}$ | +++ |
| WC 4 / 80,2 | +++ | leicht | sehr gut / 130 ° | 0,8 mm/15 mm | 0,048 kg/m² x s$^{1/2}$ | +++ |
| WC 5 / 78,0 | +++ | deutlich | sehr gut / 145 ° | 0,8 mm/12 mm | 0,052 kg/m² x s$^{1/2}$ | +++ |
| WC 6 / 80,0 | +++ | stark | sehr gut / 128 ° | 0,2 mm/ 3 mm | 0,060 kg/m² x s$^{1/2}$ | +++ |
| WC 7 / 80,0 | +++ | keine | sehr gut / 125 ° | 0,3 mm/ 9 mm | 0,035 kg/m² x s$^{1/2}$ | +++ |
| SG 1 / 85,0 | — | leicht braun, wachsartig* | mäßig / 50 ° | 0,8 mm/16 mm | 0,090 kg/m² x s$^{1/2}$** | — |
| SG 2 / 78,0 | — | stark braun, stark wachsartig* | mäßig / 40 ° | 0,8 mm/12 mm | 0,120 kg/m² x s$^{1/2}$** | — |

\*   Der wachsartige, etwa 150 µ dicke Belag konnte nur mühsam mit der Stahlbürste, und dann nur unter Beschädigung des Untergrundes entfernt werden.

\*\*  Der wachsartige Belag wurde nicht entfernt.

\*\*\* Die Auftragsgeräte können durch Spülen mit Wasser leicht gereinigt werden (+++); die Auftragsgeräte können ausschließlich mit organischen Lösemitteln gereinigt werden (---).

EP 0 819 665 B1

**Beispiele 2: Hydrophobierendes Grundierungsmittel für mineralische Beschichtungen auf mineralischen Baustoffen**

Die erfindungsgemäße, wäßrige Creme WC 3 wird auf Kalksandstein mit 200 g/m$^2$ aufgetragen. Nach 14tägigem Lagern bei Raumtemperatur werden nachstehende Eigenschaften des hydrophobierten Kalksandsteins analog Beispiel 1 gemessen:

Verfärbung:      keine
Abperleffekt:      sehr gut
Kontaktwinkel:      140 °
Eindringtiefe:      6 mm
w-Wert:      0,035 kg/m$^2$ x s$^{1/2}$
sd-Wert:      0,03 m

Der sd-Wert wurde nach DIN 52615 gemessen; sd-Werte < 0,1 m weisen auf hohe Wasserdampfdurchlässigkeit hin, sd-Werte > 0,1 m auf verringerte Wasserdampfdurchlässigkeiten.
Der 14 Tage gelagerte und so grundierte Kalksandstein wird mit Siliconharzemulsionsfarbe nach DIN 18363 (der Gehalt an organischen Harzen übersteigt nicht den Gehalt an Organopolysiloxanen) bestrichen. Dann wird die Haftzugfestigkeit der Beschichtung nach ISO 4624 bestimmt zu 2,9 N/mm$^2$. Ohne die hydrophobierende Grundierung (mit Creme WC 4 aufgetragen mit 200 g/m$^2$) wird die Haftung dieser Siliconharzfarbe auf Kalksandstein nur mit 1,5 N/mm$^2$ ermittelt.
Die erfindungsgemäße, wäßrige Creme WC 5 wird 4 Wochen bei 50 °C gelagert und zeigt danach keine optische Veränderung. Anschließend wird diese Creme durch Pinselauftrag (200 g/m$^2$) auf eine mit 2 mm dicken mürben Kalkzementputz beschichtete Faserzementplatte aufgetragen und danach 14 Tage bei Raumtemperatur gelagert.
Beim unbehandelten Kalkzementputz wird ein w-Wert von 1,3 kg/m$^2$ x s$^{1/2}$ gefunden.
Folgende Eigenschaften des so hydrophobierten Kalkzementputzes werden gefunden:

Abperleffekt:      sehr gut
Kontaktwinkel:      130 °
Eindringtiefe:      2 mm
w-Wert:      0,054 kg/m$^2$ x s$^{1/2}$

Auffallend ist die verbesserte Oberflächenfestigkeit des Kalkzementputzes nach der Applikation der Creme WC 4.
Der so behandelte Untergrund kann mit Siliconharzemulsionsfarben nach Beispiel 1 beschichtet werden. Das so beschichtete Präparat zeigt nach Q-UV-Schnellbewitterung nach 1000 h keinerlei Abplatzungen oder farbliche Veränderungen bei Erhalt des sehr guten Abperleffekts.
Die erfindungsgemäße, wäßrige Creme WC 7 wird auf Beton mit 300 g/m$^2$ aufgetragen. Nach 14tägigem Lagern bei Raumtemperatur werden nachstehende Eigenschaften der hydrophobierten Betonprobe analog Beispiel 1 gemessen:

Verfärbung:      keine
Abperleffekt:      sehr gut
Kontaktwinkel:      125 °
Eindringtiefe:      9 mm
w-Wert:      0,035 kg/m$^2$ x s$^{1/2}$

Die 14 Tage gelagerte und so grundierte Betonprobe wird mit Siliconharzemulsionsfarbe nach DIN 18363 (der Gehalt an organischen Harzen übersteigt nicht den Gehalt an Organopolysiloxanen) bestrichen. Dann wird die Haftzugfestigkeit der Beschichtung nach ISO 4624 bestimmt zu 2,0 N/mm$^2$. Ohne die hydrophobierende Grundierung (mit Creme WC 7 aufgetragen mit 300 g/m$^2$) wird die Haftung dieser Siliconharzfarbe auf Kalksandstein nur mit 1,3 N/mm$^2$ ermittelt.

**Patentansprüche**

1.  Wäßrige standfeste Creme, wobei die Creme eine pastöse, wasserhaltige Zubereitung ist, welche ein von Festkörpern freies Emulsionssystem aus Wirkstoff, Wasser und Emulgatoren ist,
    welche die Komponenten

(A), welche ausgewählt werden aus

(A1) $C_1$-$C_{20}$-Alkyl-$C_2$-$C_6$-alkoxysilanen und

(A2) Alkoxygruppen enthaltendem Organopolysiloxan, gegebenenfalls

(B) Organopolysiloxan, das zusätzlich zu anderen Organosiloxaneinheiten solche Siloxaneinheiten enthält, die über SiC-gebundene Reste mit basischem Stickstoff aufweisen, mit der Maßgabe, daß die Aminzahl des Organopolysiloxans mindestens 0,01 beträgt, und

(C) Emulgator

enthält,

wobei die Creme dann standfest ist, wenn die Creme auf eine senkrechte Beton- oder Kalksandsteinfläche mit einer Auftragsstärke von 1 mm durch Spritzen oder Rakeln aufgebracht wird und diese Creme nach der Applikation nicht mehr als 1 cm nach unten absinkt, bevor sie von der Beton- oder Kalksandsteinfläche völlig absorbiert worden ist.

2. Wäßrige Creme nach Anspruch 1, bei der die $C_1$-$C_{20}$-Alkyl-$C_2$-$C_6$-alkoxysilane (A1) 1 oder 2 gleiche oder verschiedene, gegebenenfalls halogensubstituierte, über SiC-gebundene einwertige $C_1$-$C_{20}$-Alkylreste besitzen und die übrigen Reste gleiche oder verschiedene $C_2$-$C_6$-Alkoxyreste sind.

3. Wäßrige Creme nach Anspruch 1 oder 2, bei der die Organolysiloxane (A2) aus Einheiten der allgemeinen Formel (I)

$$R_xSi(OR^1)_ySi(OH)_zO_{\frac{4-x-y-z}{2}} \qquad (I),$$

bestehen, in der

R     gleiche oder verschiedene einwertige, gegebenenfalls halogensubstituierte, über SiC-gebundene $C_1$-$C_{20}$-Kohlenwasserstoffreste,

$R^1$    gleiche oder verschiedene einwertige $C_1$-$C_6$-Alkylreste,

x     0, 1, 2 oder 3, durchschnittlich 0,8 bis 1,8,

y     0,1, 2 oder 3, durchschnittlich 0,01 bis 2,0 und

z     0, 1, 2 oder 3, durchschnittlich 0,0 bis 0,5 bedeuten, mit der Maßgabe, daß die Summe von x, y und z höchstens 3,5 beträgt.

4. Wäßrige Creme nach einem der Ansprüche 1 bis 3, bei der die Organopolysiloxane (B) aus Einheiten der allgemeinen Formel (II)

$$R^2_aR^3_b(OR^4)_cSiO_{\frac{4-a-b-c}{2}} \qquad (II),$$

aufgebaut sind, in der

$R^2$    gleiche oder verschiedene einwertige, von basischem Stickstoff freie, gegebenenfalls halogensubstituierte, SiC-gebundene $C_1$-$C_{20}$-Kohlenwasserstoffreste bedeutet,

$R^3$    gleiche oder verschiedene einwertige, gegebenenfalls halogensubstituierte, SiC-gebundene basischen Stickstoff aufweisende $C_1$-$C_{30}$-Kohlenwasserstoffreste bedeutet,

$R^4$    gleich oder verschieden sein kann und Wasserstoffatom oder $C_1$-$C_6$-Alkylreste,

a     0, 1, 2 oder 3,

b     0, 1, 2 oder 3, durchschnittlich mindestens 0,05 und

c     0, 1, 2 oder 3 ist,

mit der Maßgabe, daß die Summe aus a, b und c kleiner oder gleich 3 ist und daß die Aminzahl des Organopolysiloxans (B) mindestens 0,01 beträgt.

5. Wäßrige Creme nach einem der Ansprüche 1 bis 4, bei der als Emulgatoren (C) nichtionische Emulgatoren eingesetzt werden, die ausgewählt werden aus Alkylpolyglycolethern, Additionsprodukten von Alkylaminen mit Ethylenoxid oder Propylenoxid, Alkylpolyglykosiden und Polyvinylalkohol.

6. Wäßrige Creme nach einem der Ansprüche 1 bis 5, bei der die Gesamtmenge der Komponenten (A) und (B) in den wässrigen Cremes 65 bis 90 Gew.-% beträgt.

7. Wäßrige Creme nach einem der Ansprüche 1 bis 6, bei der der Anteil des Emulgators (C) 0,2 bis 2 Gew.-% beträgt.

**8.** Verfahren zur Herstellung der wäßrigen Creme gemäß einem der Ansprüche 1 bis 7, bei dem in einem ersten Schritt aus einem Teil der Komponenten (A) und gegebenenfalls (B) und dem größten Teil des Emulgators und des Wassers eine leicht bewegliche wäßrige Emulsion hergestellt wird und in einem 2. Schritt de restlichen Komponenten (A) und gegebenenfalls (B) in die wäßrige Emulsion eingearbeitet werden, bis eine cremeartige Konsistenz erreicht ist.

**9.** Verwendung der wäßrigen Creme gemäß einem der Ansprüche 1 bis 7 zur Hydrophobierung von Baustoffen, als Bindemittel und Grundiermittel in Bautenbeschichtungen und zur Hydrophobierung von feinteiligen anorganischen Stoffen.

## Claims

**1.** Aqueous, stiff cream which is a pasty, water-containing preparation which is an emulsion system composed of active compound, water and emulsifiers and containing no solids, which cream contains the components

(A), which are selected from
(A1) $C_1$-$C_{20}$-alkyl-$C_2$-$C_6$-alkoxysilanes and
(A2) alkoxy-containing organopolysiloxane, if desired
(B) organopolysiloxane which, in addition to other organosiloxane units, contains siloxane units which contain radicals bonded via SiC and containing basic nitrogen, with the proviso that the amine number of the organopolysiloxane is at least 0.01, and
(C) emulsifier,
said cream being stiff when, following its application by spraying or knife coating in a thickness of 1 mm to a vertical concrete or sand-lime brick surface, it runs down by no more than 1 cm before being absorbed fully by the concrete or sand-lime brick surface.

**2.** Aqueous cream according to Claim 1, in which the $C_1$-$C_{20}$-alkyl-$C_2$-$C_6$-alkoxysilanes (A1) contain 1 or 2 identical or different, optionally halogen-substituted, monovalent $C_1$-$C_{20}$-alkyl radicals bonded via SiC, and the remaining radicals are identical or different $C_2$-$C_6$-alkoxy radicals.

**3.** Aqueous cream according to Claim 1 or 2, in which the organopolysiloxanes (A2) comprise units of the general formula (I)

$$R_xSi(OR^1)_ySi(OH)_zO_{\frac{4-x-y-z}{2}} \tag{I},$$

in which

**R** are identical or different monovalent, optionally halogen-substituted $C_1$-$C_{20}$-hydrocarbon radicals bonded via SiC,
**R$^1$** are identical or different monovalent $C_1$-$C_6$-alkyl radicals,
$x$ is 0, 1, 2 or 3, on average from 0.8 to 1.8,
**y** is 0, 1, 2 or 3, on average from 0.01 to 2.0, and
**z** is 0, 1, 2 or 3, on average from 0.0 to 0.5,
with the proviso that the sum of **x**, **y** and **z** is at most 3.5.

**4.** Aqueous cream according to one of Claims 1 to 3, in which the organopolysiloxanes (B) are built up from units of the general formula (II)

$$R^2_a R^3_b (OR^4)_c SiO_{\frac{4-a-b-c}{2}} \tag{II},$$

in which

**R$^2$** are identical or different monovalent, optionally halogen-substituted, SiC-bonded $C_1$-$C_{20}$-hydrocarbon radicals containing no basic nitrogen,
**R$^3$** are identical or different monovalent, optionally halogen-substituted, SiC-bonded $C_1$-$C_{30}$-hydrocarbon radicals containing basic nitrogen,
**R$^4$** may be identical or different and is a hydrogen atom or $C_1$-$C_6$-alkyl radicals,
**a** is 0, 1, 2 or 3,

**b**    is 0, 1, 2 or 3, on average at least 0.05, and

**c**    is 0, 1, 2 or 3,
with the proviso that the sum of **a**, **b** and **c** is less than or equal to 3, and that the amine number of organopolysiloxane (B) is at least 0.01.

5. Aqueous cream according to one of Claims 1 to 4, in which the emulsifiers (C) used are nonionic emulsifiers selected from the group consisting of alkylpolyglycol ethers, products of the addition reaction of alkylamines with ethylene oxide or propylene oxide, alkylpolyglycosides and polyvinyl alcohol.

6. Aqueous cream according to one of Claims 1 to 5, in which the total amount of components (A) and (B) in the aqueous cream is from 65 to 90% by weight.

7. Aqueous cream according to one of Claims 1 to 6, in which the proportion of the emulsifier (C) is from 0.2 to 2% by weight.

8. Process for the preparation of the aqueous cream according to one of Claims 1 to 7, in which, in a first step, a readily mobile aqueous emulsion is prepared from some of components (A) and, if used, (B) and the majority of the emulsifier and water, and, in a 2nd step, the remainder of components (A) and, if used, (B) is incorporated into the aqueous emulsion until a creamy consistency has been achieved.

9. Use of the aqueous cream according to one of Claims 1 to 7 for hydrophobicizing building materials, as a binder and primer in building coatings and for hydrophobicizing finely divided inorganic substances.

**Revendications**

1. Crème aqueuse ferme, la crème étant une préparation aqueuse pâteuse qui est un système en émulsion, exempt de corps solides, constitué de composant actif, d'eau et d'émulsionnants,
qui contient les composants

(A), qui sont sélectionnés parmi
(A1) des (alkyl en $C_1$-$C_{20}$) alkoxysilanes en $C_2$-$C_6$, et
(A2) un organopolysiloxane contenant des groupements alkoxy, le cas échéant
(B) un organopolysiloxane qui, outre d'autres motifs organosiloxane, contient les motifs siloxane qui présentent des radicaux à liaison SiC avec de l'azote basique, étant entendu que l'indice d'amine de l'organopolysiloxane vaut au moins 0,01, et
(C) un émulsionnant,
la crème étant alors ferme, lorsque la crème est appliquée par pulvérisation ou raclage sur une surface verticale de béton ou de brique silico-calcaire avec une épaisseur appliquée de 1 mm, et cette crème ne descendant pas de plus de 1 cm vers le bas après l'application, avant d'être complètement absorbée par la surface de béton ou de brique silico-calcaire.

2. Crème aqueuse suivant la revendication 1, dans laquelle les (alkyl en $C_1$-$C_{20}$)alkoxysilanes en $C_2$-$C_6$ (A1) possèdent 1 ou 2 radicaux alkyle en $C_1$-$C_{20}$ monovalents, identiques ou différents, à liaison SiC, le cas échéant substitués par un halogène, et dans laquelle les autres radicaux sont des radicaux alkoxy en $C_2$-$C_6$ identiques ou différents.

3. Crème aqueuse suivant la revendication 1 ou 2, dans laquelle les organopolysiloxanes (A2) sont constitués de motifs de formule générale (I) :

$$R_xSi(OR^1)_ySi(OH)_zO_{(4-x-y-z)/2} \tag{I,}$$

dans laquelle

R    signifie des radicaux hydrocarbonés en $C_1$-$C_{20}$ monovalents, identiques ou différents, à liaison SiC, le cas échéant substitués par un halogène;

$R^1$   signifie des radicaux alkyle en $C_1$-$C_6$ monovalents identiques ou différents;

x    vaut 0, 1, 2 ou 3, en moyenne 0,8 à 1,8;

y    vaut 0, 1, 2 ou 3, en moyenne 0,01 à 2,0, et

z      vaut 0, 1, 2 ou 3, en moyenne 0,0 à 0,5,
étant entendu que la somme de x, y et z vaut au plus 3,5.

4. Crème aqueuse suivant l'une des revendications 1 à 3, dans laquelle les organopolysiloxanes (B) sont formés de motifs de formule générale (II) :

$$R^2_a R^3_b (OR^4)_c SiO_{(4-a-b-c)/2} \qquad \text{(II)},$$

dans laquelle

$R^2$    signifie des radicaux hydrocarbonés en $C_1$-$C_{20}$ monovalents, identiques ou différents, à liaison SiC, le cas échéant substitués par un halogène, exempts d'azote basique;

$R^3$    signifie des radicaux hydrocarbonés en $C_1$-$C_{30}$ monovalents, identiques ou différents, à liaison SiC, le cas échéant substitués par un halogène, présentant de l'azote basique;

$R^4$    peut être identique ou différent et est un atome d'hydrogène ou des radicaux alkyle en $C_1$-$C_6$;

a     vaut 0, 1, 2 ou 3;

b     vaut 0, 1, 2 ou 3, en moyenne au moins 0,05, et

c     vaut 0, 1, 2 ou 3,
étant entendu que la somme de a, b et c est inférieure ou égale à 3 et que l'indice d'amine de l'organopolysiloxane (B) vaut au moins 0,01.

5. Crème aqueuse suivant l'une des revendications 1 à 4, dans laquelle les émulsionnants (C) utilisés sont des émulsionnants non ioniques, qui sont choisis parmi des éthers d'alkylpolyglycols, des produits d'addition d'alkylamines avec de l'oxyde d'éthylène ou de l'oxyde de propylène, des alkylpolyglycosides et du poly(alcool vinylique).

6. Crème aqueuse suivant l'une des revendications 1 à 5, dans laquelle la quantité totale des composants (A) et (B) dans les crèmes aqueuses s'élève à 65 jusqu'à 90% en poids.

7. Crème aqueuse suivant l'une des revendications 1 à 6, dans laquelle la proportion de l'émulsionnant (C) s'élève à 0,2 jusqu'à 2% en poids.

8. Procédé de préparation de la crème aqueuse suivant l'une des revendications 1 à 7, dans lequel, dans une première étape, on prépare une émulsion aqueuse facilement mobile à partir d'une partie des composants (A) et le cas échéant (B) et de la majeure partie de l'émulsionnant et de l'eau, et dans lequel, dans une deuxième étape, les composants (A) et le cas échéant (B) restants sont incorporés dans l'émulsion aqueuse, jusqu'à ce que l'on obtienne une consistance crémeuse.

9. Utilisation de la crème aqueuse suivant l'une des revendications 1 à 7, pour l'imperméabilisation de matériaux de construction, comme liant et agent d'apprêt dans des revêtements pour bâtiments et pour l'imperméabilisation de substances inorganiques finement divisées.